# EUROPÄISCHE PATENTSCHRIFT

(11) **EP 0 596 351 B1**
(45) Veröffentlichungstag und Bekanntmachung des Hinweises auf die Patenterteilung: **23.04.1997**
(21) Anmeldenummer: 93117212.6
(22) Anmeldetag: 23.10.1993
(51) Int. Cl.: B60Q 1/00, B60Q 1/28

(54) **Scheinwerfer-Leuchten-Einheit für Kraftfahrzeuge**
Headlamp and light unit for vehicle
Combinaison phare-feux pour véhicule

(30) Priorität: 04.11.1992 DE 4237162
(43) Veröffentlichungstag der Anmeldung: 11.05.1994
(73) Patentinhaber: Hella KG Hueck & Co., 59552 Lippstadt (DE)
(72) Erfinder: Koch, Hubert, D-59597 Erwitte (DE); Mazziotti, Pietro Antonio, D-59556 Lippstadt (DE)

(56) Entgegenhaltungen:
- EP-A- 0 464 689
- EP-A- 0 504 626
- DE-A- 4 040 682
- DE-U- 9 007 203

## Beschreibung

Die Erfindung betrifft eine Scheinwerfer-Leuchten-Einheit für Kraftfahrzeuge, welche zusammengebaut in eine Karosserieöffnung einsetzbar und an der Karosserie befestigbar ist, mit folgenden Merkmalen:
- die Leuchte ist seitlich neben dem Scheinwerfer angeordnet, und der Scheinwerfer und die Leuchte weisen separate Gehäuse auf, die jeweils durch eine Lichtscheibe abgeschlossen sind, von der zumindest die Lichtscheibe des Scheinwerfers schalenförmig ausgeführt ist,
- die beiden Lichtscheiben sind an ihrer Vorderseite durch einen Spalt voneinander getrennt und verlaufen mit ihrer Vorderseite bündig zueinander,
- die Leuchte ist um ein Schwenklager des Scheinwerfers verschwenkbar, dessen Schwenkachse quer zur Einsetzrichtung der Scheinwerfer-Leuchten-Einheit und parallel zu der der Leuchte benachbarten Seitenwandung der Lichtscheibe des Scheinwerfers verläuft,
- die Leuchte geht auf der dem Scheinwerfer abgewandten Seite mit der Vorderseite ihrer Lichtscheibe bündig in die Außenseite der an die Lichtscheibe angrenzenden Karosserie über.

Eine solche Scheinwerfer-Leuchten-Einheit ist aus der DE-A-37 26 834 bekannt. Die Leuchte ist an dem Traggestell des Scheinwerfers schwenkbar gelagert. Das Schwenklager ist von einem an das Leuchtengehäuse angeformten Flansch und einer in dem Traggestell verschraubbar gelagerten Befestigungsschraube, welche durch eine Öffnung des Flansches hindurchgeht, gebildet. Nach dem Einsetzen der Scheinwerfer-Leuchten-Einheit in die Karosserieöffnung kann die Leuchte mit der Vorderseite ihrer Lichtscheibe von Hand an den Verlauf der an sie angrenzenden Karosserie angepaßt werden. Nach diesem zusätzlichen Arbeitsgang muß die Leuchte umständlich und zeitaufwendig von der Rückseite der Einheit her mittels der Befestigungsschraube an dem Scheinwerfer arretiert werden. Außerdem ist zwischen der Leuchte und dem Traggestell des Scheinwerfers ein ratschenartiges Halteelement notwendig, damit sich die eingestellte Leuchte zwischen ihrem Ausrichten und Befestigen an dem Traggestell nicht selbsttätig verstellt. Bei der bekannten Scheinwerfer-Leuchten-Einheit ist es weiterhin nachteilig, daß das Schwenklager zwischen dem Leuchtengehäuse und dem auf der Rückseite des Scheinwerfers verlaufenden Traggestell besteht und somit der Abstand zwischen dem Schwenklager und der vorderen Öffnung des zwischen der Leuchte und dem Scheinwerfer bestehenden Spaltes groß ist. Dadurch kann bei einem Verschwenken der Lichtscheibe der Leuchte vom Scheinwerfer weg, auch wenn der Schwenkwinkel klein ist, der Spalt unerwünscht groß sein kann. Deshalb wäre es sehr vorteilhaft, wenn die Schwenkachse möglichst nahe der vorderen Öffnung des zwischen der Leuchte und dem Scheinwerfer bestehenden Spaltes liegt, insbesondere in dem Bereich der Seitenwandung der schalenförmigen Lichtscheibe des Scheinwerfers, welcher der Leuchte benachbart ist. Bei einer solchen Lage der Schwenkachse müßte jedoch das Traggestell sich bis zwischen der Seitenwandung der Lichtscheibe des Scheinwerfers und der Leuchte erstrecken und könnte bei der Leuchte zu einer Verkleinerung der für den Lichtaustritt dienenden vorderen Gehäuseöffnung führen.

Aus der EP-A-0 464 689 ist eine Scheinwerfer-Leuchten-Einheit bekannt, bei welcher die Leuchte nach dem Einsetzen der Einheit in die Karosserieöffnung nicht um eine Schwenkachse verstellbar ist, und somit kann ihre Vorderseite dem Verlauf der an sie angrenzenden Karosserie nicht angepaßt werden. Die Leuchte liegt auf der dem Scheinwerfer zugewandten Seite mit einer rückspringenden Kammkante in einer Hohlkehle eines nach außen gerichteten Flansches des Lichtscheibenfußes des Scheinwerfers und auf der dem Scheinwerfer abgewandten Seite an dem äußeren Rand des für den Scheinwerfer und die Leuchte gemeinsamen Gehäuses an. Bei einer solchen Konstruktion ist zwar sichergestellt, daß nach dem Einsetzen des Leuchtenreflektors und der von ihm getragenen Lichtscheibe in das Scheinwerfergehäuse der Spalt zwischen der Lichtscheibe der Leuchte und der Lichtscheibe des Scheinwerfers sehr klein ist, jedoch ist diese Leuchte in ihrer Lage zur an die Leuchte angrenzenden Karosserie unveränderbar. In axialer Richtung ist die Leuchte durch einen an die Rückseite des Leuchtenreflektors angeformten Rasthaken gehalten, welcher eine Öffnung in der Rückwand des Gehäuses hintergreift. Der die Hohlkehle aufweisende Flansch der Lichtscheibe ist an den Streuscheibenfuß angebracht, weil in diesem Bereich, wie üblich, die Werkzeugtrennung besteht. Um den Flansch in einem kleineren Abstand zu der vorderen Öffnung des zwischen der Leuchte und dem Scheinwerfer bestehenden Spaltes an die Seitenwandung der Lichtscheibe anformen zu können, müßte der Flansch bei einer Kunststoffstreuscheibe durch ein verstellbares Werkzeugteil entformt werden, und bei einer aus Glas bestehenden Streuscheibe wäre zu der Herstellung des Flansches ein hoher technischer Aufwand notwendig. Außerdem kann bei engen Platzverhältnissen in der Karosserieöffnung die dem Scheinwerfer zugewandte Wandung der Leuchte nicht sehr nahe dem Lichtscheibenfuß des Scheinwerfers verlaufen, um die für den Lichtaustritt dienende Gehäuseöffnung der Leuchte so groß wie möglich gestalten zu können, weil an die der Leuchte zugewandte Seitenwandung der Lichtscheibe des Scheinwerfers der radial nach außen gerichtete und die Hohlkehle aufweisende Flansch angeformt ist.

Bei der aus der DE-C-32 42 245 bekannten Scheinwerfer-Leuchten-Einheit ist die seitlich neben dem Scheinwerfer angeordnete Leuchte durch eine an ihrer Rückseite befestigte Zugfeder zur Rückseite der Einheit hin gegen Anschläge der Karosserie gezogen. Hierbei besteht jedoch kein Schwenklager zwischen dem Scheinwerfer und der Leuchte, so daß die Leuchte in einem gesonderten Arbeitsgang zum Scheinwerfer ausgerichtet werden muß. Außerdem kann die Scheinwerfer-Leuchten-Einheit nicht zusammengesetzt, sondern es müssen in getrennten Arbeitsgängen die Leuchte und der Scheinwerfer in die Karosserieöffnung eingesetzt werden.

Aufgabe der Erfindung ist es, die im Oberbegriff des Anspruchs 1 beschriebene Scheinwerfer-Leuchten-Einheit derart zu gestalten, daß das Schwenklager des Scheinwerfers, um welche die Leuchte verschwenkbar ist, auch bei einer tiefen schalenförmigen Lichtscheibe des Scheinwerfers so nahe zur Vorderseite der Lichtscheibe des Scheinwerfers angeordnet werden kann, daß nach dem Ausrichten der Leuchte zu der an sie angrenzenden Karosserie die Spaltbreite nicht unerwünscht groß sein kann und dabei das Schwenklager kein zur Leuchte hin vorspringendes Element ist, durch welches die für den Lichtaustritt dienende vordere Gehäuseöffnung der Leuchte kleiner ausfallen könnte. Darüber hinaus soll die Leuchte beim Einsetzen der Scheinwerfer-Leuchten-Einheit in die Karosserieöffnung auf der dem Scheinwerfer abgewandten Seite mit der Vorderseite ihrer Lichtscheibe sich dem Verlauf der angrenzenden Karosserie selbsttätig anpassen können und nach dem Befestigen des Scheinwerfers an der Karosserie selbsttätig gehalten werden.

Diese Aufgabe wird nach der Erfindung dadurch gelöst, daß
- die den Spalt begrenzende Seitenwandung der schalenförmigen Lichtscheibe des Scheinwerfers mit dem an die Vorderseite der Lichtscheibe angrenzenden vorderen Abschnitt zur optischen Achse des Scheinwerfers hin versetzt verläuft und durch diesen Versatz auf ihrer Innen- und Außenseite in einer Stufe verläuft, wobei die Trittfläche der inneren Stufe entgegen und die Trittfläche der äußeren Stufe in Lichtaustrittsrichtung gerichtet ist,
- die Trittfläche der äußeren Stufe als Hohlkehle ausgeführt ist und das Schwenklager für die Leuchte ist, welche mit einer rückspringenden Kammkante in die Hohlkehle eingreift,
- die Leuchte auf der Seite des Scheinwerfers an dem Schwenklager des Scheinwerfers und auf der dem Scheinwerfer abgewandten Seite mit einem seitlichen Rand an dem Rand der Karosserieöffnung durch ein zwischen dem Leuchtengehäuse und dem Scheinwerfergehäuse eingesetztes federndes Element gedrückt anliegt.

Dadurch kann die der Leuchte zugewandte Seitenwandung der Lichtscheibe des Scheinwerfers oberhalb, unterhalb und innerhalb der Stufe annähernd gleich stark ausgeführt sein. Außerdem kann die als Schwenklager dienende Hohlkehle in jedem beliebigen Abstand zur vorderen Öffnung des Spaltes bzw. zum Streuscheibenfuß angeordnet werden, weil die Hohlkehle nicht in einen radial nach außen gerichteten Flansch eingebracht ist. Deshalb kann die Werkzeugtrennung weiterhin in der Nähe des Lichtscheibenfußes verlaufen. Dies ist besonders bei einer aus Glas hergestellten Lichtscheibe wichtig, da sonst die Herstellung der Streuscheibe nur mit sehr großem technischen Aufwand möglich ist. Bei der erfindungsgemäßen Scheinwerfer-Leuchten-Einheit ist die Leuchte vor dem Einsetzen der Scheinwerfer-Leuchten-Einheit in die Karosserieöffnung durch das federnde Element mit ihrer Rückseite über ihre gewünschte Soll-Lage hinaus zum Scheinwerfer hin geschwenkt und an dem Scheinwerfer anliegend gehalten. Dadurch erfolgt bei einem Einsetzen der Scheinwerfer-Leuchten-Einheit in die Karosserieöffnung nach dem Anliegen des Randes der Leuchte an dem Rand der Karosserieöffnung ein Schwenken der Leuchte mit ihrer Lichtscheibe zum Scheinwerfer hin, bis der Scheinwerfer in seine Endlage gebracht und an der Karosserie befestigt ist. Aus diesem Grund ist ein nachträgliches Ausrichten der Leuchte zur angrenzenden Außenseite der Karosserie nicht notwendig. Außerdem ist ein zusätzliches Befestigen der Leuchte an der Karosserie nicht notwendig, da diese sicher durch das federnde Element gehalten ist. Darüber hinaus ist es vorteilhaft, wenn das federnde Element eine Zugfeder (Schraubenfeder) ist, deren Kraftrichtung zwischen dem Schwenklager und der dem Scheinwerfer abgewandten Seite der Leuchte hindurchgeht. Dadurch liegt die Leuchte etwa mit gleich großer Kraft an dem Schwenklager der Lichtscheibe des Scheinwerfers und an der dem Schwenklager gegenüberliegenden Rand der Karosserieöffnung an.

Bei einer Scheinwerfer-Leuchten-Einheit, dessen Scheinwerfer-Lichtscheibe mit seiner Vorderseite in einen nach oben geöffneten Winkel zur Vertikalen verläuft, ist es weiterhin vorteilhaft, wenn die Trittfläche in der Stufe senkrecht verläuft. Bei einer senkrecht verlaufenden Schwenkachse ist nur ein horizontales Schwenken der Leuchte möglich, und somit kann nach dem Verschwenken der Leuchte ihre optische Achse nicht gegenüber einer horizontalen Ebene nach oben oder unten hin abgekippt sein.

Vorteilhaft ist es weiterhin, wenn ein mittlerer Abschnitt der Stufe als Schwenklager für die Leuchte dient. Dadurch muß die Stufe nur in ihrem mittleren Abschnitt mit der Hohlkehle ausgeführt sein. Die Tiefe der Stufe kann sich, ausgehend von ihrem mittleren Abschnitt bis zu ihren beiden Enden hin verkleinern und sogar bis Null auslaufen. Hierbei ist es weiterhin zweckmäßig, wenn die Kammkante der Leuchte von dem freien Endabschnitt einer in Einsetzrichtung der Scheinwerfer-Leuchten-Einheit weisenden Fahne der Leuchte gebildet ist. Dadurch kann die Leuchte, weil sie mit ihrer Fahne linienförmig an der Innenfläche der Hohlkehle anliegt, vertikal nicht wegkippen.

Ein weiterer Vorteil ist es, wenn der die Stufe gebildete vordere und hintere Abschnitt der Seitenwandung der Scheinwerfer-Lichtscheibe und die dem hinteren Abschnitt der Seitenwandung der Lichtscheibe des Scheinwerfers benachbarte Seitenwandung der Leuchte annähernd in Lichtaustrittsrichtung verlaufen. Hierbei ist es zweckmäßig, wenn die Leuchte mit ihrer Kammkante und ihrem vorderen, am Spalt verlaufenden Rand entgegen der Lichtaustrittsrichtung annähernd fluchtend vor dem hinteren Abschnitt der Seitenwandung der Lichtscheibe des Scheinwerfers liegt und die Lichtscheibe der Leuchte eine in den Spalt hinein sich erstreckende Seitenwandung aufweist, welche annähernd parallel zu der ihr benachbarten Seitenwandung der Lichtscheibe des Scheinwerfers verläuft. Dadurch kann nicht nur die vordere für den Lichtaustritt dienende Gehäuseöffnung der Leuchte, sondern auch die des Scheinwerfers optimal groß gestaltet sein. Hierbei sollte jedoch der zur Aufnahme des Fußes der Scheinwerfer-Lichtscheibe dienende äußere Gehäuserand zumindest nicht wesentlich breiter ausgeführt sein, als die Scheinwerfer-Lichtscheibe innerhalb der Stufe quer zur Lichtaustrittsrichtung dick ist.

Weiterhin ist es von Vorteil, wenn die Leuchte mit ihrem Gehäuse an dem Schwenklager des Scheinwerfers anliegt. Dadurch wird die Verbindung zwischen der Leuchten-Lichtscheibe und dem Leuchtengehäuse nicht auf Zug belastet, und somit kann die Verbindung nicht beschädigt werden. Eine Beschädigung könnte zu einer Undichtigkeit zwischen der Lichtscheibe und dem Gehäuse führen.

Ebenfalls ist es vorteilhaft, wenn der an dem mittleren Abschnitt der Stufe angrenzende untere Abschnitt der Stufe annähernd in einem äquidistanten Abstand zu dem ihm benachbarten äußeren Rand der Lichtscheibe des Scheinwerfers und der an dem mittleren Abschnitt der Stufe angrenzende obere Endabschnitt der Stufe annähernd in einem äquidistanten Abstand zur Vorderseite der Lichtscheibe des Scheinwerfers verläuft. Bei einer solchen Ausführungsform der Lichtscheibe kann die Stufe nicht in der Vorderseite der Lichtscheibe auslaufen, und somit ist es immer möglich, die gesamte Stufe durch die Leuchten-Lichtscheibe abzudecken.

Ferner ist es vorteilhaft, wenn die Leuchte auf der dem Scheinwerfer abgewandten Seite mit einem seitlich vorspringenden Rand an dem Rand der Karosserieöffnung anliegt und zwischen beiden Rändern eine Nut-Feder-Verbindung besteht. Dadurch ist sichergestellt, daß die Leuchte auf der dem Scheinwerfer abgewandten Seite mit dem die Vorderseite ihrer Lichtscheibe begrenzenden Rand genau dem die Außenseite und die Öffnung der Karosserie begrenzenden Rand gegenüberliegt und die Lichtscheibe mit ihrer Vorderseite bündig in die Außenseite der Karosserie übergeht.

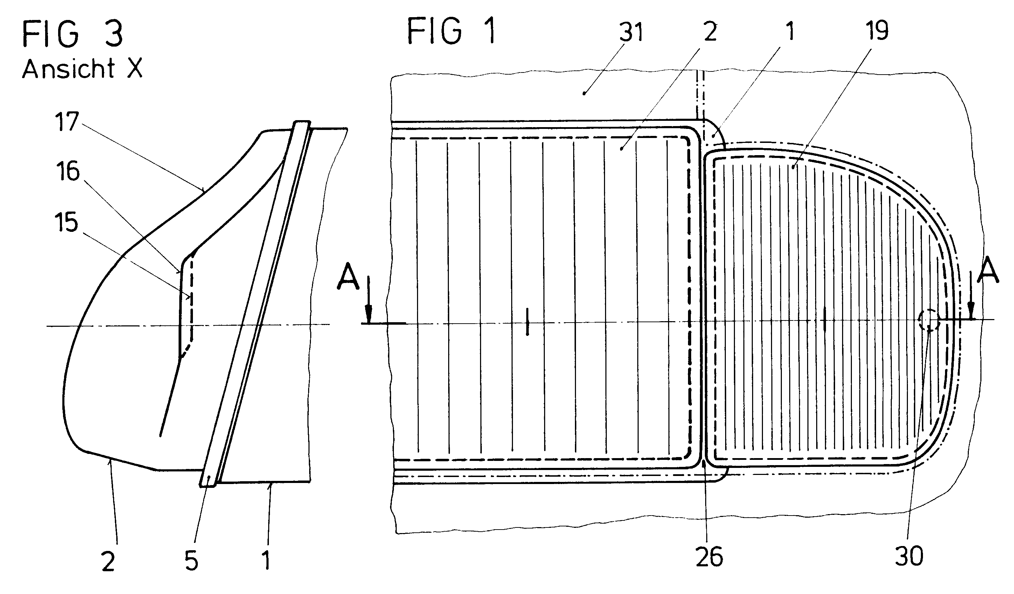

Ein Ausführungsbeispiel nach der Erfindung ist in der Zeichnung dargestellt, und zwar zeigen
- Fig. 1: eine Vorderansicht einer Scheinwerfer-Leuchten-Einheit,

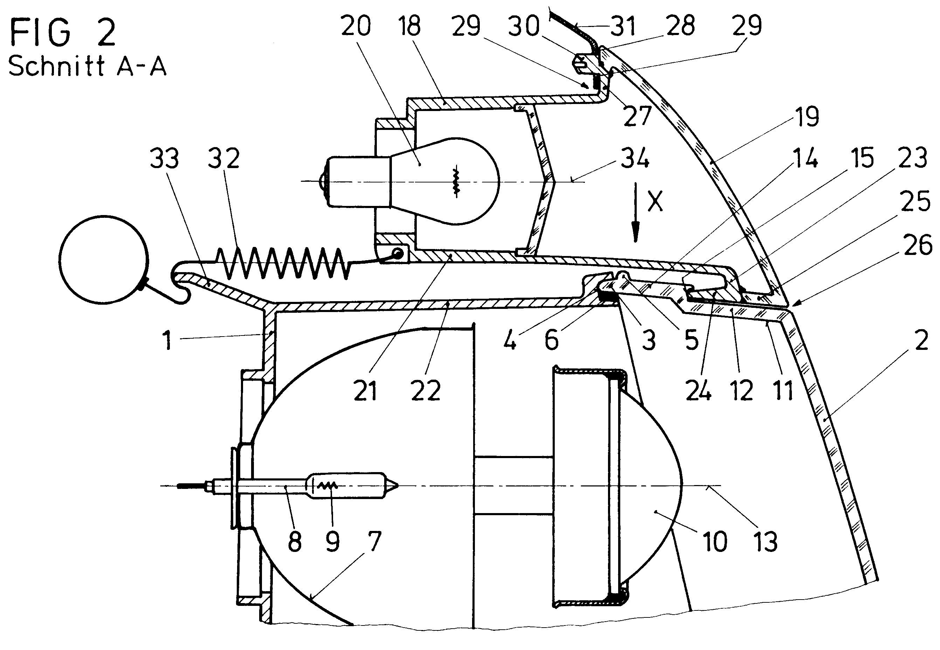

- Fig. 2: einen horizontalen mittleren Längsschnitt durch die Scheinwerfer-Leuchten-Einheit und
- Fig. 3: eine Ansicht aus Richtung X auf den Scheinwerfer, ohne die seitlich neben ihm angeordnete Leuchte.

Die Scheinwerfer-Leuchten-Einheit besteht aus einem Scheinwerfer und einer seitlich neben dem Scheinwerfer angeordneten und an dem Scheinwerfer verschwenkbar arretierten Leuchte. Der Scheinwerfer weist ein aus Kunststoff hergestelltes Gehäuse (1) auf, welches durch eine tiefe schalenförmige Lichtscheibe (2) abgedeckt ist. Die Lichtscheibe (2) ist aus Glas hergestellt und mit ihrem äußeren umlaufenden Fuß (3) in ein im Querschnitt U-förmiges Aufnahmebett (4) des äußeren umlaufenden Randes des Gehäuses (1) eingesetzt. Der Fuß (3) der Lichtscheibe (2) weist angrenzend an das Aufnahmebett (4) einen kleinen nach außen gerichteten Flansch (5) auf. Dadurch ist es möglich, die Lichtscheibe (2) durch Halteelemente (nicht dargestellt), welche den Flansch und den das Aufnahmebett (4) aufweisenden Rand des Gehäuses (1) umgreifen, an dem Gehäuse zu arretieren. In das Aufnahmebett (4) ist ein den Lichtscheibenfuß (3) umgebendes Abdichtmittel (6) eingebracht. Der Flansch (5) der Lichtscheibe (2) überragt nicht den äußeren Schenkel des im Querschnitt U-förmigen Aufnahmebettes (4). In den Innenraum des Scheinwerfers ist ein schalenförmiger Reflektor (7) mit einem inneren und äußeren Brennort, eine Lampe (8), deren Lichtquelle (9) im inneren Brennort des Reflektors (7) angeordnet ist, und eine zwischen dem Reflektor und der Vorderseite der Lichtscheibe angeordnete Linse (10) eingesetzt, welche das von dem Reflektor reflektierte Licht bündelt. Die der Leuchte zugewandte Seitenwandung (11) der Lichtscheibe (2) weist einen vorderen Abschnitt (12), welcher zur optischen Achse (13) des Scheinwerfers hin versetzt verläuft, und den an den versetzten Abschnitt (12) angrenzenden hinteren Abschnitt (14) auf. Durch den versetzten vorderen Abschnitt (12) verläuft die Seitenwandung auf ihrer Innen- und Außenseite in einer Stufe. Die Trittfläche der inneren Stufe weist entgegen der Lichtaustrittsrichtung, und die Trittfläche (15) der äußeren Stufe ist in Lichtaustrittsrichtung gerichtet und im Querschnitt als Hohlkehle ausgeführt. Der vordere und hintere Abschnitt (11, 14) verlaufen parallel zueinander und wegen der notwendigen Auszugsschräge der umlaufenden Seitenwandung der Lichtscheibe (2) in einem kleinen spitzen Winkel zur optischen Achse (13). Die Wanddicke der die Stufe aufweisenden Seitenwandung (11) der Lichtscheibe (2) ist bis auf den den Flansch (5) aufweisenden Abschnitt und die Hohlkehle (15) aufweisenden Abschnitt annähernd gleich stark. Zwischen den Abschnitten (14 und 12) ist die Abmessung der Seitenwandung (11) quer zur Lichtaustrittsrichtung nicht größer als die Außenabmessung des das Aufnahmebett (4) aufweisenden Randes des Gehäuses (1). Die Stufe der Seitenwandung (11) der Lichtscheibe (2) weist, wie in Fig. 3 zu sehen ist, ausschließlich in einem mittleren Abschnitt (16) die Hohlkehle (15) auf. Die die Hohlkehle (15) aufweisende Trittfläche des mittleren Abschnitts (16) der Stufe verläuft senkrecht. Angrenzend an den mittleren Abschnitt (16) der Stufe verläuft die Stufe nach oben hin etwa parallel zur Vorderseite (17) der Lichtscheibe (2) und nach unten hin etwa parallel zu dem den Flansch (5) aufweisenden Fuß der Lichtscheibe (2). Zu einer Vertikalen verläuft die Lichtscheibe (2) sowohl mit ihrer Vorderseite (17) als auch mit der Ebene, in welcher ihr Fuß (3) verläuft, in jeweils einem nach oben hin geöffneten spitzen Winkel. Der von der Vorderseite (17) gebildete spitze Winkel ist jedoch kleiner als der von der Ebene gebildete spitze Winkel, in welchem die Lichtscheibe mit ihrem Fuß verläuft.

Seitlich neben dem Scheinwerfer ist die Leuchte angeordnet. Die Leuchte weist ein aus Kunststoff bestehendes Gehäuse (18) auf, welches durch eine schalenförmig verlaufende Lichtscheibe (19) abgeschlossen ist und in welches durch eine Öffnung in der Gehäuserückseite eine Lampe (20) eingesetzt ist. Die sich zugewandten Gehäusewandungen (21 und 22) des Leuchtengehäuses (18) und des Scheinwerfergehäuses (1) verlaufen annähernd parallel zueinander und zur optischen Achse (13) des Scheinwerfers. Die Wandung (21) des Leuchtengehäuses (18) geht sehr nahe an dem den Fuß (3) aufweisenden Abschnitt (14) der Seitenwandung (11) der Lichtscheibe (2) des Scheinwerfers vorbei und weist an ihrem freien Ende einen zur optischen Achse (13) des Scheinwerfers hin gerichteten Randabschnitt (23) auf. An den Randabschnitt (23) des Leuchtengehäuses ist eine rückspringende Fahne (24) angeformt, deren freier Rand als Kammkante dient, mit welcher die Fahne (24) in die Hohlkehle (15) der Lichtscheibe (2) eingreift. Auf der Vorderseite des Randabschnitts (23) liegt die schalenförmige Lichtscheibe (19) der Leuchte mit dem Fuß ihrer Seitenwandung (25) an und ist mit diesem verschweißt. Die Seitenwandung (25) der Lichtscheibe (19) der Leuchte und die Fahne (24) liegen in Lichtaustrittsrichtung annähernd fluchtend hintereinander und verlaufen über ihre gesamte Länge durch einen kleinen Spalt (26) getrennt zum vorderen Abschnitt (12) der Seitenwandung (11) der Lichtscheibe (2). Die Vorderseiten der Lichtscheiben (2 und 19) gehen bündig ineinander über. Auf der dem Scheinwerfer abgewandten Seite weist die Leuchte einen seitlich vorspringenden Rand (27) auf, welcher mit seiner Rückseite an dem Rand (28) einer die Scheinwerfer-Leuchten-Einheit aufnehmenden Karosserieöffnung (29) anliegt. Dabei greift der Rand (27) der Leuchte mit einer in Einsetzrichtung der Scheinwerfer-Leuchten-Einheit gerichteten Feder (30) in eine Nut des Randes (28) der Karosserie (31) ein. An dem hinteren Ende der Seitenwandung (21) des Leuchtengehäuses ist eine Zugfeder (32) befestigt, welche eine Wandung (33) der Rückseite des Scheinwerfergehäuses (1) hintergreift und durch ihre Kraft die Leuchte sowohl gegen die Hohlkehle (15) des Scheinwerfers als auch gegen den Rand (28) der Karosserie (31) drückt.

Beim Einsetzen der Scheinwerfer-Leuchten-Einheit in die Karosserieöffnung (29) ist zuerst die Feder (30) der Leuchte (18) in die Nut des Randes (28) der Karosserie (31) einzuhängen. Danach ist die Scheinwerfer-Leuchten-Einheit um die Nut-Feder-Verbindung in die Karosserieöffnung hineinzuschwenken, bis das Scheinwerfergehäuse (1) an Karosserieteilen (nicht dargestellt) anschlägt und nach seiner Ausrichtung an diesen befestigt ist. Beim Einschwenken, Ausrichten und Befestigen des Scheinwerfers richtet sich die Leuchte zum Scheinwerfer und der an sie angrenzenden Karosserie (31) selbsttätig aus. Dabei dient die Hohlkehle (15) des Scheinwerfers als Schwenklager. Nach dem selbsttätigen Ausrichten der Leuchte ist, weil das Schwenklager (15) trotz der tiefen schalenförmigen Lichtscheibe (2) sehr nahe zur Vorderseite der Scheinwerfer-Leuchten-Einheit angeordnet ist, der Spalt an seiner vorderen Öffnung sehr klein, auch wenn die Leuchte um einen etwas größeren Winkel geschwenkt ist. Da die Achse des Schwenklagers (15) vertikal verläuft, kippt beim Schwenken der Leuchte um die Achse des Schwenklagers (15) ihre optische Achse nicht nach oben oder unten hin weg. Da die Nut-Feder-Verbindung zwischen dem Leuchtengehäuse und dem Rand (28) der Karosserie (31) sehr nahe der Kante der Karosserieöffnung an der Außenseite der Karosserie angeordnet ist, ist nach dem Einsetzen der Scheinwerfer-Leuchten-Einheit sichergestellt, daß die Vorderseite der Lichtscheibe (19) der Leuchte auf der dem Scheinwerfer abgewandten Seite bündig zur Außenseite der Karosserie (31) verläuft. Bei der Scheinwerfer-Leuchten-Einheit fällt wegen des sehr nahe zur vorderen Öffnung des Spaltes (26) angeordneten Schwenklagers (15) weder die Lichtaustrittsfläche des schalenförmigen Reflektors (7) noch die für den Lichtaustritt der Leuchte dienende vordere Öffnung des Gehäuses (18) kleiner aus.

### Bezugszahlen

### Scheinwerfer-Leuchten-Einheit

- (1): Gehäuse
- (2): Lichtscheibe
- (3): Fuß
- (4): Aufnahmebett
- (5): Flansch
- (6): Abdichtmittel
- (7): Reflektor
- (8): Lampe
- (9): Lichtquelle
- (10): Linse
- (11): Seitenwandung
- (12): vorderer Abschnitt
- (13): optische Achse
- (14): hinterer Abschnitt
- (15): Hohlkehle
- (16): mittlerer Abschnitt
- (17): Vorderseite
- (18): Gehäuse
- (19): Lichtscheibe
- (20): Lampe
- (21): Wandung
- (22): Wandung
- (23): Randabschnitt
- (24): Fahne
- (25): Seitenwandung
- (26): Spalt
- (27): Rand
- (28): Rand
- (29): Karosserieöffnung
- (30): Feder
- (31): Karosserie
- (32): Zugfeder
- (33): Wandung
- (34): optische Achse

## Patentansprüche

1. Scheinwerfer-Leuchten-Einheit für Kraftfahrzeuge, welche zusammengebaut in eine Karosserieöffnung einsetzbar und an der Karosserie befestigbar ist, mit folgenden Merkmalen:
- die Leuchte ist seitlich neben dem Scheinwerfer angeordnet, und der Scheinwerfer und die Leuchte weisen separate Gehäuse (1 bzw. 18) auf, die jeweils durch eine Lichtscheibe (2 bzw. 19) abgeschlossen sind, von der zumindest die Lichtscheibe (2) des Scheinwerfers schalenförmig ausgeführt ist,
- die beiden Lichtscheiben (2 und 19) sind an ihrer Vorderseite durch einen Spalt (26) voneinander getrennt und verlaufen mit ihrer Vorderseite bündig zueinander,
- die Leuchte ist um ein Schwenklager (15) des Scheinwerfers verschwenkbar, dessen Schwenkachse quer zur Einsetzrichtung der Scheinwerfer-Leuchten-Einheit und parallel zu der der Leuchte benachbarten Seitenwandung (11) der Lichtscheibe (2) des Scheinwerfers verläuft,
- die Leuchte geht auf der dem Scheinwerfer abgewandten Seite mit der Vorderseite ihrer Lichtscheibe (19) bündig in die Außenseite der an die Lichtscheibe (19) angrenzenden Karosserie (31) über,
dadurch gekennzeichnet, daß
- die den Spalt begrenzende Seitenwandung (11) der schalenförmigen Lichtscheibe (2) des Scheinwerfers mit dem an die Vorderseite der Lichtscheibe angrenzenden vorderen Abschnitt (12) zur optischen Achse (13) des Scheinwerfers hin versetzt verläuft und durch diesen Versatz auf ihrer Innen- und Außenseite in einer Stufe verläuft, wobei die Trittfläche der inneren Stufe entgegen und die Trittfläche (15) der äußeren Stufe in Lichtaustrittsrichtung gerichtet ist,
- die Trittfläche (15) der äußeren Stufe als Hohlkehle ausgeführt ist und das Schwenklager für die Leuchte ist, welche mit einer rückspringenden Kammkante (24) in die Hohlkehle eingreift,
- die Leuchte auf der Seite des Scheinwerfers an dem Schwenklager (15) des Scheinwerfers und auf der dem Scheinwerfer abgewandten Seite mit einem seitlichen Rand (27) an dem Rand (28) der Karosserieöffnung (29) durch ein zwischen dem Leuchtengehäuse (18) und dem Scheinwerfergehäuse (1) eingesetztes federndes Element (32) gedrückt anliegt.

2. Scheinwerfer-Leuchten-Einheit nach Anspruch 1, bei der die Vorderseite der Lichtscheibe (2) des Scheinwerfers in einem nach oben hin geöffneten Winkel zu einer Vertikalen verläuft, dadurch gekennzeichnet, daß die Trittfläche (15) der Stufe in der Seitenwandung (11) der Lichtscheibe (2) senkrecht verläuft.

3. Scheinwerfer-Leuchten-Einheit nach Anspruch 1 oder 2, dadurch gekennzeichnet, daß ein mittlerer Abschnitt (16) der Stufe ausschließlich das Schwenklager (15) für die Leuchte ist.

4. Scheinwerfer-Leuchten-Einheit nach einem der Ansprüche 1 bis 3, dadurch gekennzeichnet, daß die Kammkante der Leuchte von dem freien Endabschnitt einer in Einsetzrichtung der Scheinwerfer-Leuchten-Einheit weisenden Fahne (24) der Leuchte gebildet ist.

5. Scheinwerfer-Leuchten-Einheit nach einem der Ansprüche 1 bis 4, dadurch gekennzeichnet, daß der durch die Stufe gebildete vordere und hintere Abschnitt (12 und 14) der Seitenwandung (11) der Lichtscheibe (2) des Scheinwerfers annähernd in Lichtaustrittsrichtung verlaufen.

6. Scheinwerfer-Leuchten-Einheit nach Anspruch 5, dadurch gekennzeichnet, daß die dem hinteren Abschnitt (14) der Seitenwandung (11) der Lichtscheibe (2) des Scheinwerfers benachbarte Seitenwandung (21) der Leuchte annähernd in Lichtaustrittsrichtung verläuft.

7. Scheinwerfer-Leuchten-Einheit nach Anspruch 5 oder 6, dadurch gekennzeichnet, daß die Leuchte mit ihrer Kammkante (24) und ihrem an der vorderen Öffnung des Spaltes (26) verlaufenden Rand entgegen der Lichtaustrittsrichtung gesehen annähernd fluchtend vor dem hinteren Abschnitt (14) der Seitenwandung (11) der Lichtscheibe (2) des Scheinwerfers liegt.

8. Scheinwerfer-Leuchten-Einheit nach einem der Ansprüche 1 bis 7, dadurch gekennzeichnet, daß die Lichtscheibe (19) der Leuchte eine in den Spalt (26) hinein sich erstreckende Seitenwandung (25) aufweist, welche annähernd parallel zu der ihr benachbarten Seitenwandung (11) der Lichtscheibe (2) des Scheinwerfers verläuft.

9. Scheinwerfer-Leuchten-Einheit nach einem der Ansprüche 1 bis 8, dadurch gekennzeichnet, daß die Leuchte mit ihrem Gehäuse (18) an dem Schwenklager (15) des Scheinwerfers anliegt.

10. Scheinwerfer-Leuchten-Einheit nach einem der Ansprüche 1 bis 9, dadurch gekennzeichnet, daß der an dem mittleren Abschnitt (16) der Stufe angrenzende untere Endabschnitt der Stufe annähernd in einem äquidistanten Abstand zu dem ihm benachbarten äußeren Rand (3) der Lichtscheibe (2) des Scheinwerfers und der an dem mittleren Abschnitt (16) der Stufe angrenzende obere Endabschnitt der Stufe annähernd in einem äquidistanten Abstand zur Vorderseite (17) der Lichtscheibe (2) des Scheinwerfers verläuft.

11. Scheinwerfer-Leuchten-Einheit nach einem der Ansprüche 1 bis 10, dadurch gekennzeichnet, daß die Leuchte auf der dem Scheinwerfer abgewandten Seite mit einem seitlich vorspringenden Rand (27) an dem Rand (28) der Karosserieöffnung (29) anliegt und zwischen beiden Rändern eine Nut-Feder-Verbindung besteht.

## Claims

1. Headlamp and light unit for motor vehicles which can be inserted in its assembled state into a body work opening and secured to the body work, having the following features:
- the light is arranged laterally next to the headlamp, and the headlamp and the light have separate housings (1 or 18) which are closed off by respective lamp covers (2 or 19), of which at least the lamp cover (2) of the headlamp is made bowl shaped,
- the two lamp covers (2 and 19) are separated from each other at their front surface by a gap (26) and extend with their front surfaces flush with respect to each other,
- the light can be swivelled about a swivel bearing (15) of the headlamp whose swivel axis extends transversely with respect to the insertion direction of the headlamp and light unit and parallel with respect to the side wall (11) of the lamp cover (2) of the headlamp which is next to the light,
- the light, with the front surface of its lamp cover (19), at the side remote from the headlamp, merges flush with the outer surface of the body work (31) adjoining the lamp cover (19),
characterised in that
- the side wall (11) of the bowl shaped lamp cover (2) of the headlamp which delimits the gap, together with the front section (12) which adjoins the front surface of the lamp cover, extends offset with respect to the optical axis (13) of the headlamp and by reason of this offset extends in a step along its inner surface and its outer surface, the tread surface of the inner step being directed opposite to, and the tread surface (15) of the outer step being directed in, the direction of the emerging illumination,
- the tread surface (15) of the outer step is made as a groove and is the swivel bearing for the light which latter engages in the groove by way of a rearwardly projecting tooth edge (24),
- the light is pressed into abutment - by means of a spring element (32) inserted between the light housing (18) and the headlamp housing (1) - at the side of the headlamp, against the swivel bearing (15) of the headlamp, and at the side remote from the headlamp, by way of a lateral rim (27), against the rim (28) of the body work opening (29).

2. Headlamp and light unit according to claim 1, in which the front surface of the lamp cover (2) of the headlamp extends at an angle upwardly open to the vertical, characterised in that the tread surface (15) of the step in the side wall (11) of the lamp cover (2) extends vertically.

3. Headlamp and light unit according to claim 1 or 2, characterised in that exclusively a middle section (16) of the step is the swivel bearing (15) for the light.

4. Headlamp and light unit according to one of claims 1 to 3, characterised in that the tooth edge of the light is formed by the free end section of a lug (24) of the light, pointing in the insertion direction of the headlamp and light unit.

5. Headlamp and light unit according to one of claims 1 to 4, characterised in that the front and rear sections (12 and 14) of the side wall (11) of the lamp cover (2) of the headlamp formed by the step, extend approximately in the direction of emerging illumination.

6. Headlamp and light unit according to claim 5, characterised in that the side wall (21) of the light which is next to the rear section (14) of the side wall (11) of the lamp cover (2) of the headlamp, extends approximately in the direction of emerging illumination.

7. Headlamp and light unit according to claim 5 or 6, characterised in that the light is disposed - as seen in the direction opposite to the direction of emerging illumination - with its tooth edge (24) and its rim that extends along the front opening of the gap (26), approximately in alignment in front of the rear section (14) of the side wall (11) of the lamp cover (2) of the headlamp.

8. Headlamp and light unit according to one of claims 1 to 7, characterised in that the lamp cover (19) of the light has a side wall (25) reaching into the gap (26), the side wall (25) extending approximately parallel with respect to its neighbouring side wall (11) of the lamp cover (2) of the headlamp.

9. Headlamp and light unit according to one of claims 1 to 8, characterised in that the light, by way of its housing (18), abuts the swivel bearing (15) of the headlamp.

10. Headlamp and light unit according to one of claims 1 to 9, characterised in that the lower end section of the step which adjoins the middle section (16) of the step extends at an approximately equidistant spacing from the neighbouring outer rim (3) of the lamp cover (2) of the headlamp, and that the upper end section of the step which adjoins the middle section (16) of the step extends at an approximately equidistant spacing from the front surface (17) of the lamp cover (2) of the headlamp.

11. Headlamp and light unit according to one of claims 1 to 10, characterised in that the light, at its side remote from the headlamp, abuts by way of a laterally projecting rim (27) against the rim (28) of the body work opening (29), and there is a seat-plunger connection between the two rims.

## Revendications

1. Unité projecteur-lampe pour des véhicules automobiles, susceptible d'être mise en place, à l'état assemblé, dans une ouverture de carrosserie et d'être fixée sur la carrosserie, présentant les éléments suivants :
- la lampe est agencée latéralement à côté du projecteur, et le projecteur et la lampe présentent des boîtiers séparés (1 ou 18) qui sont refermés chacun par une plaque d'éclairement (2 ou 19), et dont au moins la plaque d'éclairement (2) du projecteur est réalisée en forme de coque,
- les deux plaques d'éclairement (2 et 19) sont séparées l'une de l'autre par une fente (26) sur leur face avant, et elles s'étendent par leur face avant en affleurement l'une avec l'autre,
- la lampe peut être basculée autour d'un palier de basculement (15) du projecteur, dont l'axe de basculement s'étend transversalement à la direction de mise en place de l'unité projecteur-lampe et parallèlement à la paroi latérale (11) de la plaque d'éclairement (2) du projecteur, ladite paroi étant voisine de la lampe,
- sur la face détournée du projecteur, la lampe se transforme par la face avant de sa plaque d'éclairement (19) en affleurement en la face extérieure de la carrosserie (31) adjacente à la plaque d'éclairement (19),
caractérisée en ce que :
- la paroi latérale (11) de la plaque d'éclairement (2) en forme de coque du projecteur, qui délimite la fente s'étend par le segment avant (12) adjacent à la face avant de la plaque d'éclairement de façon décalée par rapport à l'axe optique (13) du projecteur, et, grâce à ce décalage sur sa face intérieure et sur sa face extérieure, elle se tranforme en un gradin, le côté intérieur du gradin étant dirigé en sens opposé à la direction de sortie de lumière, et le côté extérieur (15) du gradin étant dirigé en direction de sortie de lumière,
- le côté extérieur (15) du gradin est réalisé sous forme d'une gorge et représente le palier de basculement pour la lampe qui s'engage dans la gorge par une arête (24) faisant saillie vers l'arrière,
- la lampe s'appuie sous pression du côté du projecteur contre le palier de basculement (15) du projecteur, et du côté détourne du projecteur, par une bordure latérale (27) contre la bordure (28) de l'ouverture de carrosserie (29), au moyen d'un élément élastique (32) mis en place entre le boîtier de lampe (18) et le boîtier de projecteur (1).

2. Unité projecteur-lampe selon la revendication 1, dans laquelle la face avant de la plaque d'éclairement (2) du projecteur s étend sous un angle ouvert vers le haut par rapport à une verticale, caractérisée en ce que le côté extérieur (15) du gradin s'étend verticalement dans la paroi latérale (11) de la plaque d'éclairement (2).

3. Unité projecteur-lampe selon l'une ou l'autre des revendications 1 et 2, caractérisée en ce qu'un segment médian (16) du gradin constitue exclusivement le palier de basculement (15) pour la lampe.

4. Unité projecteur-lampe selon l'une quelconque des revendications 1 à 3, caractérisée en ce que l'arête de la lampe est formée par le segment d'extrémité libre d'une patte (24) de la lampe, ladite patte étant dirigée en direction de mise en place de l'unité projecteur-lampe.

5. Unité projecteur-lampe selon l'une quelconque des revendications 1 à 4, caractérisée en ce que les segments avant et arrière (12 et 14) de la paroi latérale (11) de la plaque d'éclairement (2) du projecteur, formés par le gradin, s'étendent approximativement en direction de sortie de lumière.

6. Unité projecteur-lampe selon la revendication 5, caractérisée en ce que la paroi latérale (21) de la lampe, qui est voisine du segment arrière (14) de la paroi latérale (11) de la plaque d'éclairement (2) du projecteur s'étend approximativement en direction de sortie de lumière.

7. Unité projecteur-lampe selon l'une ou l'autre des revendications 5 et 6, caractérisée en ce que la lampe, vue en sens opposé à la direction de sortie de lumière, se trouve par son arête (24) et par sa bordure s'étendant dans l'ouverture avant de la fente (26) approximativement en alignement en avant du segment arrière (14) de la paroi latérale (11) de la plaque d'éclairement (2) du projecteur.

8. Unité projecteur-lampe selon l'une quelconque des revendications précédentes, caractérisée en ce que la plaque d'éclairement (19) de la lampe présente une paroi latérale (25) qui s'étend jusque dans la fente (26) et qui s'étend approximativement parallèlement à la paroi latérale (11) de la plaque d'éclairement (2) du projecteur, qui lui est voisine.

9. Unité projecteur-lampe selon l'une quelconque des revendications 1 à 8, caractérisée en ce que la lampe s'appuie par son boîtier (18) contre le palier de basculement (15) du projecteur.

10. Unité projecteur-lampe selon l'une quelconque des revendications 1 à 9, caractérisée en ce que le segment d'extrémité inférieur du gradin, qui avoisine le segment médian (16) du gradin s'étend approximativement à une distance équidistante de la bordure extérieure (3) voisine de la plaque d'éclairement (2) du projecteur, et le segment d'extrémité supérieur du gradin, qui avoisine le segment médian (16) du gradin, s étend approximativement à une distance équidistante de la face avant (17) de la plaque d'éclairement (2) du projecteur.

11. Unité projecteur-lampe selon l'une quelconque des revendications précédentes, caractérisée en ce que la lampe s'appuie, sur le côté détourné du projecteur, par une bordure (27) faisant latéralement saillie, contre la bordure (28) de l'ouverture de carrosserie (29), et en ce qu'il existe une liaison à languette et rainure entre les deux bordures.
